# EUROPEAN PATENT SPECIFICATION

(11) **EP 1 421 820 B1**
(45) Date of publication and mention of the grant of the patent: **12.04.2006**
(21) Application number: 01972449.1
(22) Date of filing: 31.08.2001
(51) Int. Cl.: H04Q 11/00, H04L 12/56

(54) **SCALABLE, MODULAR, STRICTLY NON-BLOCKING ELECTRO-OPTICAL CROSS CONNECT CORE**
SKALIERBARER, MODULÄRER, STRINGENT BLOCKIERUNGSFREIER ELEKTRO-OPTISCHER QUERVERBINDUNGSKERN
MODULE DE BRASSEUR OPTIQUE ECHELONNABLE, MODULAIRE ET STRICTEMENT IMBLOCABLE D'INTERCONNEXIONS ELECTRO-OPTIQUES

(43) Date of publication of application: 26.05.2004
(73) Proprietor: TELEFONAKTIEBOLAGET LM ERICSSON (publ), 164 83 Stockholm (SE)
(72) Inventor: TESTA, Francesco, I-00040 Pomezia (RM) (IT); TOMEI, Fabio, I-00174 Rome (IT)
(74) Representative: Faggioni, Carlo Maria
(86) International application number: PCT/IT2001/000453
(87) International publication number: WO 2003/019975

(56) References cited:
- EP-A- 1 026 912
- DE-B- 1 130 482
- SHIH-CHIAN YANG ET AL: "RECONFIGURABLE FAULT TOLERANT NETWORKS FOR FAST PACKET SWITCHING" IEEE TRANSACTIONS ON RELIABILITY, IEEE INC. NEW YORK, US, vol. 40, no. 4, 1 October 1991 (1991-10-01), pages 474-487, XP000232098 ISSN: 0018-9529

## Description

The present invention relates to the field of telecommunications and refers to a scalable, modular, strictly non-blocking electro-optical cross connect core.

It is known that the next generation of optical transport networks will have to provide global transport for both the legacy services and the new IP (Internet Provider) services and will have to allow automated lightpath provisioning, routing and restoration (on this subject, see: P. BONENFANT & A. RODRIGUEZ-MORAL: "Optical Data Networking", IEEE Communication Magazine, March 2000). To achieve that in an effective way, the Optical Transport Network needs to be flexible, reconfigurable, scalable and cost effective.

To provide flexibility and reconfigurability, optical cross connects (OXCs) have been developed and introduced in the optical transport networks, by means of them high capacity data streams are routed through the optical path layer. These apparatuses have to be independent from client signal (i.e. signal bit rate and characteristics) and protocol.

Moreover, OXC apparatuses have to be scalable and expandible, i.e., starting from a basic OXC size with a certain number of ports, it should be possible to reduce or expand easily said size by reducing or increasing the number of boards.

Cost optimization requires also a modular OXC implementation, i.e. all the boards constituting the OXC core must be equal.

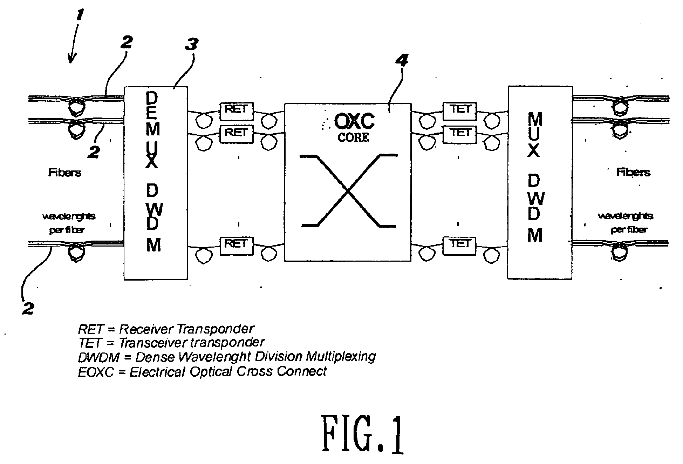

A possible OXC architecture, to which the invention can be applied, is shown in fig. 1 of the annexed drawings. A comb 1 of different wavelength, high capacity channel is transported on each of the input fibers 2. All this optical signals are demultiplexed in 3, prior to enter into OXC core. OXC core 4 is one of the basic elements of the architecture, because the major part of the characteristics of OXC apparatuses are provided by it. OXC has also to provide non blocking characteristics in routing the wavelength signals.

Most of the OXC implementations make use of electronic switch elements as OXC internal building blocks. This is the case represented in fig. 1, in which OXC core 4 is an electro-optical technology OXC core.

In order to achieve strictly non-blocking characteristics, conventional OXC systems use in its core the well known Clos architecture (see: A. PATTAVINA: "Switching Theory", Wiley) in a full connected three stage network. It is built by interconnecting a large number of smaller size switch elements (or elementary switching matrices).

This system assures strictly non-blocking features because it is capable to route each one of the N OXC core inputs in a N×N OXC, using effectively the number of matrix elements; but it is not effectively scalable.

In fact, due to the rigid structure of the Clos configuration, if the size of the N ports must be scaled, all the core interconnection must be modified as well. The scalability in this conventional architecture can be provided only by adding or reducing the number of switch elements in the two Clos outer stages. In any case, the size of the central stage has to be established according to the maximum size which is desired for the OXC system and has to be present always, even when low port count is required.

As it can be noted, the scalability involves only the outer stages and it is less attractive because a customer is obliged to buy the central stage with the available maximum size, even if it needs only very few ports, with few outer stage elements.

In order to avoid the initial investment for the maximum size central stage, some implementations of the OXC cores in the Clos configuration use a central stage only with the needed size; but in this case, when the OXC system is scaled, a manual interconnection rearrangement among the switch elements has to be done. This solution is not very attractive for the network operators because any time the OXC has to be scaled, a craftsman has to operate manually in the OXC core, with cost and time consumption.

In another configuration, called SKOL (see: R.I. McDONALD: "Large Modular Expandable Optical Switching Matrices", IEEE Phot. Tech. Letters, Vol. 11, No. 6, June 1999), there is no longer a concentrated central stage like in Clos architecture, because in this case the central stage is rearranged among the different input/output modules.

The advantage of SKOL architecture is that it avoids the maximum size to be always adopted for the central stage. But it has the drawback of being always oversized (compared with Clos architecture), and this very fast increasingly with the number of ports.

EP-A-1026912 discloses an optical cross-connect core with switch matrix modules and respective interconnections.

The new kind of OXC core according to the invention uses electronic and/or optical switch elements as building blocks and a three stage interconnection architecture that also fulfils the Clos theorem to achieve the strictly non blocking feature.

The invention consists in a new OXC hardware architecture in which the scalability is obtained simply subdividing the Clos configuration in scalable modules without oversizing. In other words, for a number N of ports, only the resources needed in the three stages of Clos are implemented.

More precisely, the OXC core in telecommunications according to the invention, of the kind employing electronic and/or optical switch elements as building blocks and a three stage interconnection architecture according to Clos theorem (Clos configuration), to achieve the strictly non-blocking condition, is defined in claim 1.

In this OXC core, the elementary switching matrices belonging to each stage of the Clos configuration are all contained in the active ones of said elements.

Moreover, said passive elements may be exclusively electric or exclusively optical; in the second case they are comprised of optical fibers or optical waveguides.

As to the backplane, it is always provided for the maximum size of the OXC core itself.

Suitably, at least one active element and three passive elements are associated, in the smallest size of the OXC core, with the backplane, passive elements being able to be replaced at any time with further active ones.

The invention will be described in the following in further detail, by way of example, referring to annexed drawings, in which:
fig. 1 illustrates the architecture of an (already considered) OXC apparatus, to which the OXC core of the present invention is applied;
fig. 2 shows an OXC core according to the invention with 32x32 ports;
figs. 3, 4, 5 show OXC cores according to the invention with 64x64, 128×128 and 256x256 ports, respectively;
fig. 6 is a scheme showing synthetically how an OXC according to the invention can be equipped according to various configuratons in order to obtain various sizes; and
fig. 7 illustrates in detail one of the passive elements of the OXC core of fig. 2.

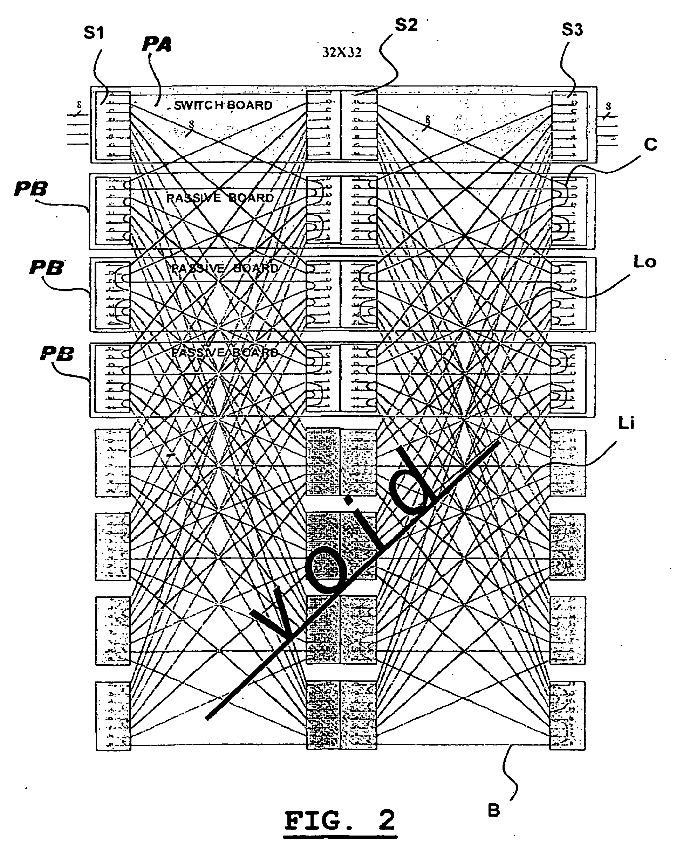

As shown in the drawings, (figs 2-5) the hardware architecture of the OXC core is carried out, according to the invention, with scalable, modular board elements of two kinds, the one active (board PA) and the other one passive (board PB), as well as with a backplane (B) interconnecting (Li) said board elements (not explicitly illustrated in the figures). The elementary switching matrices (S1, S2, S3) of every stage of the Clos configuration are all contained in the active ones (PA) of said elements or boards.

As also can be seen from the annexed drawings (figs. 2-5), all the three elementary switching matrices of every line of the Clos configuration belong to a single board PA, which gives the system the modularity and compactness necessary to ensure good cost features. The scalability is achieved simply by adding or taking away active and passive boards in the OXC core or substituting them with one another. In this way only one central stage of the desired size is provided in the system.

In the 32x32 ports OXC core of fig. 2, which represents the minimum sizing structure of the device according to the invention, are provided a single active board PA of elementary switching matrices and three passive boards PB, the rest of the board of the OXC core being empty.

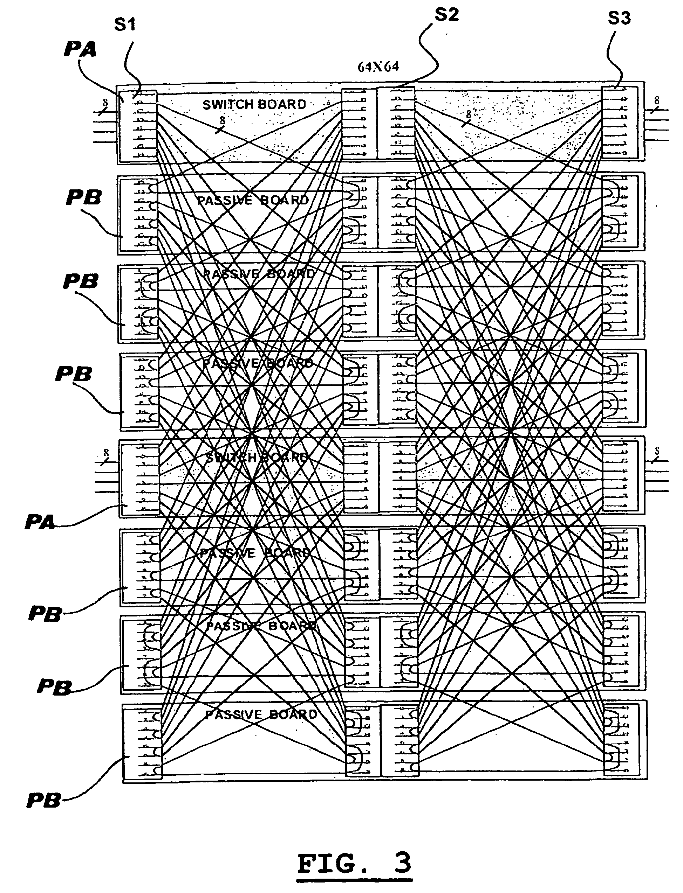

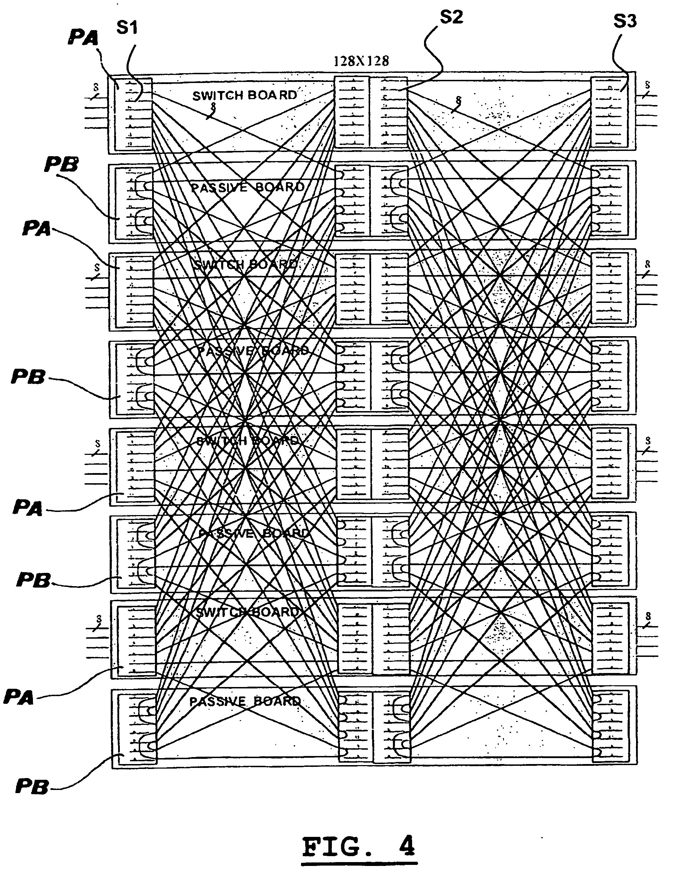

In the OXC cores of figs. 3 and 4, with 64x64 and 128x128 ports, respectively, are provided two and four active boards Pa, respectively, with which alternate two pairs of three passive boards and four passive boards PB, respectively.

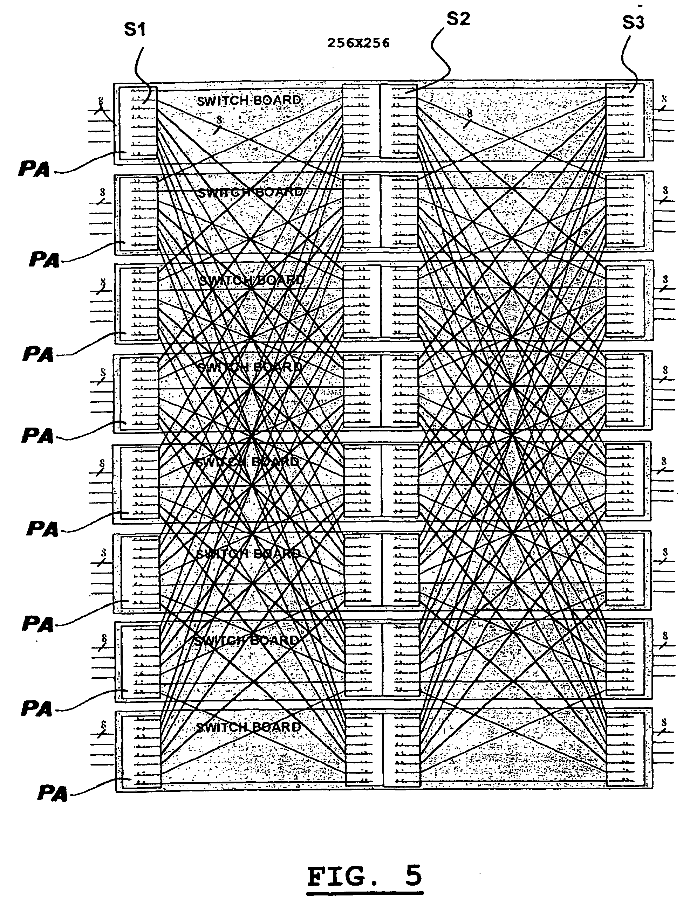

Finally, in the 256x256 ports OXC core of fig. 5, which represents the maximum sizing structure of the device according to the invention, are provided only eight active boards PA and no passive board PB.

The suitable interconnections (C, Lo) between active boards PA are obtained by employing passive boards PB. These can be exclusively electric or exclusively optical, in the second case being comprised of optical fibers or optical waveguides. In both cases passive boards PB allow a simple and quick readjustment of the system when the OXC core is scaled. The interconnection with the backplane is provided for the maximum sizing, with the maximum number of present active boards. If the OXC core must be scaled, only two simple condition must be fulfilled: that only the number of required switch boards are present and the excess boards are removed; and that the starting interconnections (C, Lo) between boards are suitably readjusted to obtain a new configuration of Clos scaled. To obtain the suitable interconnections with OXC core scaled, the passive boards PB are used.

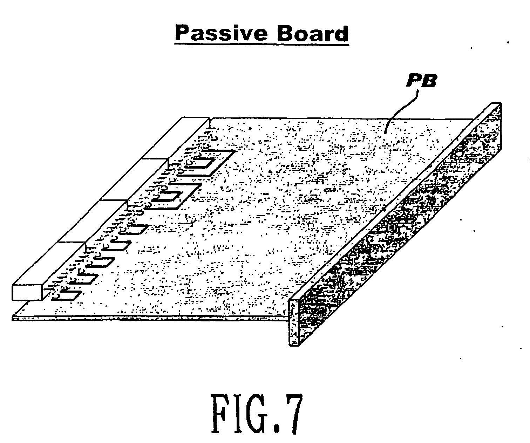

With the new OXC core architecture according to the invention which has been described and illustrated, it is possible to obtain both the scalability of the system and the efficient use of the switch elements, simply by implementing additional modular passive boards, low-cost, fully electric or exclusively optical. Fig. 7 schematically illustrates a possible implementation of fully electric passive board PB, provided only with conductors and connectors.

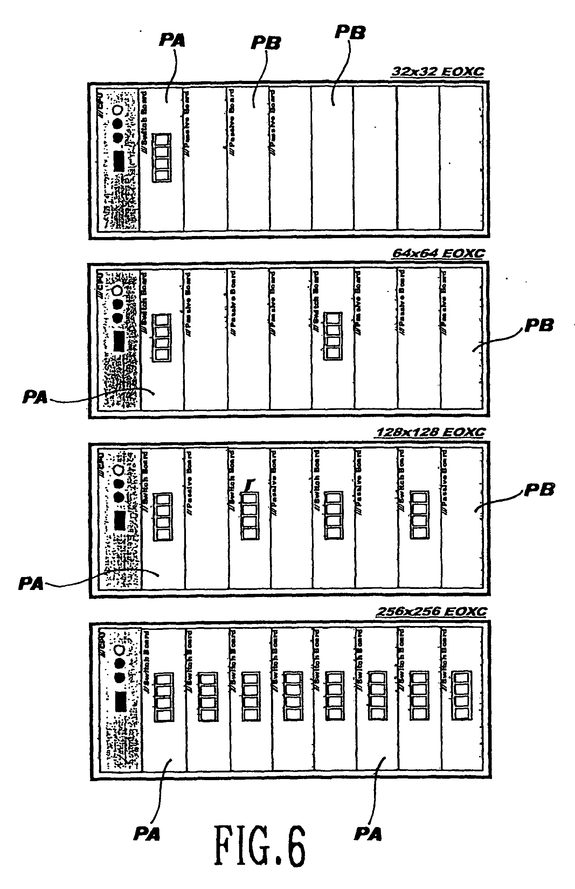

The high mechanical integration allowed by the present invention results in a very compact OXC core which, also for its maximum-size 256x256 port embodiment, illustrated in fig. 5, can be contained in a single sub-rack. This is shown by fig. 6, which also illustrates, synthetically, how the OXC core according to the invention can assume, with the same sizes, different sizes, being equipped according to different configurations, corresponding to those of figs. 2-4.

The invention implies the advantage of providing an OXC core with non-blocking characteristics, with a simplified and efficient utilization of hardware, by ensuring at the same time full modularity and scalability of the OXC core itself.

Of course, the practical embodiments of the improved OXC core falling within the scope of the present claimed invention could be other than those disclosed and illustrated herein.

## Claims

1. An electro-optical cross connect core in telecommunications, comprising
cross connect core ports,
electronic and/or optical switch matrices interconnected in a three stage Clos architecture (S1, S2, S3) with respective interconnections, to achieve a strictly non-blocking condition,
and a backplane,
**characterized in that**
the scalable architecture of said core being carried out with removable modular boards of only two kinds, namely active boards (PA) and passive boards (PB), switching matrices of all three stages of the Clos architecture being implemented on each of said active boards (PA), said passive boards (PB) being provided only with said respective interconnections (C),
and **in that** said backplane (B) interconnects (Li) said board elements (PA, PB), the number of said board elements (PA, PB) determining the size of the core.

2. Electro-optical cross connect core according to claim 1), wherein said passive boards (PB) are provided only with conductors and connectors.

3. Electro-optical cross connect core according to claims 1) or 2), in which said passive boards (PB) are exclusively electric.

4. Electro-optical cross connect core according to claims 1) or 2), in which said passive boards (PB) are exclusively optical.

5. Electro-optical cross connect core according to claim 4), in which said optical passive boards (PB) comprise optical fibers.

6. Electro-optical cross connect core according to claim 4) or 5), in which said optical passive boards (PB) comprise optical waveguides.

7. Electro-optical cross connect core according to any one of claims 1) to 6), in which the backplane (B) is provided for the maximum size of the core itself.

8. Electro-optical cross connect core according to claims 1) to 7), in which at least one active board (PA) and three passive boards (PB) are associated with the backplane (B).

9. Electro-optical cross connect core according to claims 1) to 7), in which only active boards (PA) are associated with the backplane (B).

## Patentansprüche

1. Elektro-optischer Querverbindungskern in Telekommunikationen, der Folgendes umfasst: Querverbindungskernports,
elektronische und/oder optische Schaltmatrizen, die in einer dreistufigen Clos-Architektur (S1, S2, S3) mit jeweiligen Zusammenschaltungen verbunden sind, um eine stringent blockierungsfreie Bedingung zu erreichen, und eine Rückwandplatine,
**dadurch gekennzeichnet, dass**
die skalierbare Architektur des Kerns mit entfernbaren modulären Boards von nur zwei Arten realisiert wird, namentlich aktive Boards (PA) und passive Boards (PB), Schaltmatrizen aller drei Stufen der Clos-Architektur an jedem der aktiven Boards (PA) implementiert sind, die passiven Boards (PB) nur mit den jeweiligen Zusammenschaltungen (C) bereit gestellt sind,
und dass die Rückwandplatine (B) die Boardelemente (PA, PB) verbindet (Li), wobei die Anzahl der Boardelemente (PA, PB) die Kerngröße bestimmt.

2. Elektro-optischer Querverbindungskern nach Anspruch 1, wobei die passiven Boards (PB) nur mit Leitern und Verbindern bereit gestellt sind.

3. Elektro-optischer Querverbindungskern nach Anspruch 1 oder 2, in dem die passiven Boards (PB) ausschließlich elektrisch sind.

4. Elektro-optischer Querverbindungskern nach Anspruch 1 oder 2, in dem die passiven Boards (PB) ausschließlich optisch sind.

5. Elektro-optischer Querverbindungskern nach Anspruch 4, in dem die optischen passiven Boards (PB) Lichtleiterfasern umfassen.

6. Elektro-optischer Querverbindungskern nach Anspruch 4 oder 5, in dem die optischen passiven Boards (PB) Lichtwellenleiter umfassen.

7. Elektro-optischer Querverbindungskern nach einem der Ansprüche 1 bis 6, in dem die Rückwandplatine (B) für die Maximalgröße des Kerns selbst bereit gestellt ist.

8. Elektro-optischer Querverbindungskern nach Ansprüchen 1 bis 7, in dem zumindest ein aktives Board (PA) und drei passive Boards (PB) der Rückwandplatine (B) zugeordnet sind.

9. Elektro-optischer Querverbindungskern nach Ansprüchen 1 bis 7, in dem nur aktive Boards (PA) der Rückwandplatine (B) zugeordnet sind.

## Revendications

1. Module de brassage électro-optique dans les télécommunications, comprenant :
des ports de module de brassage,
des matrices de commutation électroniques et/ou optiques interconnectées dans une architecture de Clos à trois étages (S1, S2, S3), avec des interconnexions respectives, afin d'obtenir une caractéristique strictement non bloquante, et
une carte de fond de panier,
**caractérisé en ce que** l'architecture extensible dudit module est réalisée à l'aide de cartes modulaires amovibles de deux types seulement, à savoir des cartes actives (PA) et des cartes passives (PB), les matrices de commutation de l'ensemble des trois étages de l'architecture de Clos étant réalisées sur chacune desdites cartes actives (PA), lesdites cartes passives (PB) étant uniquement dotées desdites interconnexions respectives (C), et
**en ce que** ladite carte de fond de panier (B) interconnecte (Li) lesdits éléments de cartes (PA, PB), le nombre desdits éléments de cartes (PA, PB) déterminant la taille du module.

2. Module de brassage électro-optique selon la revendication 1, dans lequel lesdites cartes passives (PB) sont uniquement dotées de conducteurs et de connecteurs.

3. Module de brassage électro-optique selon la revendication 1 ou 2, dans lequel lesdites cartes passives (PB) sont exclusivement électriques.

4. Module de brassage électro-optique selon la revendication 1 ou 2, dans lequel lesdites cartes passives (PB) sont exclusivement optiques.

5. Module de brassage électro-optique selon la revendication 4, dans lequel lesdites cartes optiques passives (PB) comprennent des fibres optiques.

6. Module de brassage électro-optique selon la revendication 4 ou 5, dans lequel lesdites cartes optiques passives (PB) comprennent des guides d'ondes optiques.

7. Module de brassage électro-optique selon l'une quelconque des revendications 1 à 6, dans lequel la carte de fond de panier (B) est fournie pour la taille maximale du module lui-même.

8. Module de brassage électro-optique selon les revendications 1 à 7, dans lequel au moins une carte active (PA) et trois cartes passives (PB) sont associées à la carte de fond de panier (B).

9. Module de brassage électro-optique selon les revendications 1 à 7, dans lequel seules des cartes actives (PA) sont associées à la carte de fond de panier (B).
